# EUROPEAN PATENT APPLICATION

(11) **EP 4 711 880 A1**
(43) Date of publication of application: **18.03.2026**
(21) Application number: 24803061.1
(22) Date of filing: 09.05.2024
(51) Int. Cl.: G05D 1/43

(54) **METHOD FOR CONTROLLING AUTONOMOUS MOBILE ROBOT, AND AUTONOMOUS MOBILE ROBOT**

(30) Priority: 09.05.2023 CN 202310518397; 16.06.2023 CN 202310718362; 16.09.2023 CN 202311196500
(71) Applicant: Positec Power Tools (Suzhou) Co., Ltd., Suzhou, Jiangsu 215123 (CN)
(72) Inventor: DUAN, Guangxue, Suzhou, Jiangsu 215123 (CN); YU, Hang, Suzhou, Jiangsu 215123 (CN); ZHENG, Siyuan, Suzhou, Jiangsu 215123 (CN); GAO, Don Zhendong, Suzhou, Jiangsu 215123 (CN); LIANG, Xuehui, Suzhou, Jiangsu 215123 (CN); ZHONG, Yinbiao, Suzhou, Jiangsu 215123 (CN); LIAO, Liangliang, Suzhou, Jiangsu 215123 (CN)
(74) Representative: Kilburn & Strode LLP
(86) International application number: PCT/CN2024/091983
(87) International publication number: WO 2024/230782

(57) **Abstract**

The present application relates to a control method for an autonomous mobile robot and an autonomous mobile robot. In an automatic working method, near-field obstacle information sent by at least one sensor is received, an obstacle position map around the autonomous mobile robot is generated based on the near-field obstacle information; an escape path is generated in response to receiving the near-field obstacle information multiple times within a limited time or space, wherein generating an escape path includes: searching for a passable direction based on a current position of the autonomous mobile robot and the obstacle position map. By adopting the method, the autonomous mobile robot can quickly escape, improving working efficiency.

## Description

### TECHNICAL FIELD

The present application relates to a control method for an autonomous mobile robot and an autonomous mobile robot.

### BACKGROUND

An autonomous mobile robot can automatically move within a certain area and work during movement to complete specific tasks.

Since the autonomous mobile robot works without human operation, the autonomous mobile robot may enter some complex areas during movement, causing a device to be trapped and unable to continue moving.

**In** this case, the autonomous mobile robot mostly adopts strategies of moving backward, rotating, and moving forward to attempt escape.

However, a movement process of this escape method has poor targeting, resulting in low escape efficiency in the complex areas and affecting user experience.

### SUMMARY

To overcome the defects of the prior art, the problem to be solved by the present application is to provide an automatic working method and an autonomous mobile robot with efficient escape.

The technical solution adopted by the present application to solve the problems of the prior art is: a method for controlling an autonomous mobile robot, wherein the method comprises: receiving near-field obstacle information sent by at least one sensor, the at least one sensor being mounted on the autonomous mobile robot; generating an obstacle position map around the autonomous mobile robot based on the near-field obstacle information; and generate an escape path in response to receiving the near-field obstacle information multiple times within a limited time or space, wherein generating an escape path comprises: searching for a passable direction based on a current position of the autonomous mobile robot and the obstacle position map.

In an embodiment, the near-field obstacle information comprises at least one of the following: collision information indicating a contact collision of the autonomous mobile robot, lifting information indicating a lifting of the autonomous mobile robot, motor torque information indicating a stall of a driving motor of the autonomous mobile robot, or non-contact obstacle remote sensing information representing indicating presence of an obstacle around the autonomous mobile robot.

In an embodiment, generating the obstacle position map around the autonomous mobile robot based on the near-field obstacle information comprises: marking a position on the obstacle position map corresponding to the near-field obstacle information as a near-field obstacles.

In an embodiment, the obstacle map is a local map around the autonomous mobile robot, and the local map is updated as the autonomous mobile robot moves.

In an embodiment, searching for a passable direction based on the current position of the autonomous mobile robot and the obstacle position map comprises: expanding near-field obstacles in the obstacle position map according to an expansion coefficient, the expansion coefficient being approximately equal to a width of the autonomous mobile robot;
determining an area in the obstacle position map where the near-field obstacle is absent as the passable direction.

In an embodiment, expanding the near-field obstacles in the obstacle position map according to the expansion coefficient comprises: expanding a subset of near-field obstacles in the obstacle position map according to the expansion coefficient, the a subset of near-field obstacles comprising the non-contact obstacle sensing information indicating presence of an obstacle around the autonomous mobile robot.

In an embodiment, searching for a passable direction based on the current position of the autonomous mobile robot and the obstacle position map comprises: obtaining a search direction and a search range for the near-field obstacles in the obstacle position map, determining, as the passable direction, a direction within the search range where the near-field obstacle is absent, wherein an initial search direction is a direction opposite to a movement direction of the autonomous mobile robot, and the search range is an area, determined by the search direction, that exceeds an area covered by the autonomous mobile robot on the map.

In an embodiment, when the passable direction cannot be found in the obstacle position map along the initial search direction, the search direction is switched to the direction opposite to the initial search direction.

In an embodiment, the method further comprises: keeping the search direction unchanged until the near-field obstacle information is received again during a process in which the autonomous mobile robot travels toward the passable direction.

In an embodiment, searching for a passable direction based on the current position of the autonomous mobile robot and the obstacle position map comprises: during a process of controlling the autonomous mobile robot to travel toward the passable direction, when the near-field obstacle information is received within a continuous time period, switching the search direction to the direction opposite to the initial search direction.

In an embodiment, searching for a passable direction based on the current position of the autonomous mobile robot and the obstacle position map comprises: correspondingly adjusting the passable direction as the current position of the autonomous mobile robot is updated and the obstacle position map is updated.

In an embodiment, searching for a passable direction based on the current position of the autonomous mobile robot and the obstacle position map comprises: when the autonomous mobile robot cannot search for the passable direction, controlling the autonomous mobile robot to ignore the obstacle position map and adjust a pose, the pose adjustment comprising at least one of the following: moving forward, moving backward, or rotating; and searching for the passable direction according to a current position of the autonomous mobile robot after pose adjustment and the obstacle position map.

In an embodiment, searching for the passable direction according to the current position of the autonomous mobile robot after pose adjustment and the obstacle position map comprises: searching for the passable direction according to the current position of the autonomous mobile robot after pose adjustment and an updated obstacle position map; wherein the obstacle position map is obtained after updating obstacles in the obstacle position map according to a preset rule, the preset rule being that when near-field obstacles identified in real-time by an non-contact obstacle remote sensing sensor mounted on the autonomous mobile robot are inconsistent with obstacles in the obstacle position map, the obstacle position map is updated according to real-time identification results of the non-contact obstacle sensing sensor.

In an embodiment, a movement angular velocity and a movement linear velocity are determined according to an angle difference between a movement direction of the autonomous mobile robot and the passable direction, the autonomous mobile robot is controlled to move toward the passable direction according to the movement angular velocity and the movement linear velocity, wherein the movement angular velocity is positively correlated with the angle difference, and the movement linear velocity is negatively correlated with the angle difference.

In an embodiment, searching for a passable direction based on the current position of the autonomous mobile robot and the obstacle position map comprises: during a process of controlling the autonomous mobile robot to move toward the passable direction, determining whether the autonomous mobile robot can rotate according to the obstacle position map around the autonomous mobile robot;
if rotation is possible, controlling the autonomous mobile robot to rotate, and searching for the passable direction according to a position after rotation.

In an embodiment, when determining whether the autonomous mobile robot can rotate, an initial rotation direction when the autonomous mobile robot determines a rotation direction is consistent with a wall-following direction of the autonomous mobile robot.

In an embodiment, searching for the passable direction according to the position after rotation comprises:
during a process of controlling the autonomous mobile robot to rotate, determining whether the near-field obstacle exists ahead through obstacle remote sensing information collected in real-time by an obstacle remote sensing sensor, the obstacle remote sensing sensor being mounted on the autonomous mobile robot, the obstacle remote sensing sensor being configured to identify obstacle remote sensing information around the autonomous mobile robot;
when it is determined that the near-field obstacle does not exist, treating the direction as the passable direction, and controlling the autonomous mobile robot to move along the direction.

In an embodiment, determining whether the near-field obstacle exists ahead is performed through obstacle remote sensing information collected in real-time by the obstacle remote sensing sensor and the obstacle position map.

In an embodiment, the method further comprises: when the autonomous mobile robot travels along the escape path for at least a first preset distance, determining that the autonomous mobile robot has successful escape.

In an embodiment, the method further comprises: after the autonomous mobile robot successfully escapes, marking, as an obstacle, an area in the obstacle position map that was traversed by the autonomous mobile robot while receiving the near-field obstacle information multiple times within a limited time period or space, and planning a path according to the updated map.

Another technical solution adopted by the present application to solve the problems of the prior art is: an autonomous mobile robot, wherein the autonomous mobile robot comprises: at least one sensor, the sensor being configured to acquire and send near-field obstacle information, the at least one sensor being mounted on the autonomous mobile robot; a controller, the controller being signal connected to the sensor, configured to receive the near-field obstacle information, and generate an obstacle position map around the autonomous mobile robot based on the near-field obstacle information; and generate an escape path in response to receiving the near-field obstacle information multiple times within a limited time or space, wherein generating an escape path comprises: searching for a passable direction based on a current position of the autonomous mobile robot and the obstacle position map.

Another technical solution adopted by the present application to solve the problems of the prior art is: a computer-readable storage medium, wherein a computer program is stored in the computer-readable storage medium, the computer program being loaded and executed by a processor to implement the above-mentioned method for controlling an autonomous mobile robot.

Compared with the prior art, the beneficial effects of the present application are: receiving near-field obstacle information sent by at least one sensor, generating an obstacle position map around the autonomous mobile robot based on the near-field obstacle information; and generate an escape path in response to receiving the near-field obstacle information multiple times within a limited time or space, wherein generating an escape path comprises: searching for a passable direction based on a current position of the autonomous mobile robot and the obstacle position map. Compared with the method of detecting that a robot is in a predicament and controlling it to randomly collide in various directions to escape, adopting the method in the present application allows a lawn mower to quickly escape, improving working efficiency.

The present application further provides a control method for a self-moving device, a self-moving device and a readable storage medium, detecting whether an obstacle exists in an area to be traveled ahead of the self-moving device, and then controlling the self-moving device to drive out from an area without obstacles to escape, since a visual recognition makes travel when the self-moving device escapes more targeted, escape efficiency of the self-moving device in complex areas can be effectively improved.

To solve the above technical problems, the present application provides a control method for a self-moving device, the self-moving device comprising a visual sensor, the visual sensor being configured to acquire an image ahead of the self-moving device, the control method comprising:
detecting whether the self-moving device meets conditions for performing escape;
if the conditions for performing escape are met, then
detecting whether an obstacle exists within a range corresponding to an area to be traveled in the image ahead of the self-moving device;
if the obstacle does not exist within the range corresponding to the area to be traveled in the image, then controlling the self-moving device to drive out from the area to be traveled to escape.

Optionally, the method further comprises:
if the obstacle exists within the range corresponding to the area to be traveled in the image, then controlling the self-moving device to perform rotation;
entering the step of detecting whether the obstacle exists within the range corresponding to the area to be traveled in the image ahead of the self-moving device.

Optionally, the controlling the self-moving device to perform rotation when the obstacle exists within the range corresponding to the area to be traveled in the image comprises:
if the obstacle exists within the range corresponding to the area to be traveled in the image, then determining whether the self-moving device has rotated a first preset angle in a current rotation direction;
if the first preset angle has not been rotated, then controlling the self-moving device to rotate in the current rotation direction.

Optionally, the controlling the self-moving device to perform rotation when the obstacle exists within the range corresponding to the area to be traveled in the image further comprises:
if the first preset angle has been rotated, then reducing the area to be traveled, and controlling the self-moving device to rotate in an opposite direction of the current rotation direction.

Optionally, after controlling the self-moving device to drive out from the area to be traveled to escape when the obstacle does not exist within the range corresponding to the area to be traveled in the image, the method further comprises:
determining whether a distance that the self-moving device drives out from the area to be traveled is less than a first preset distance;
if less than the first preset distance, then determining that the self-moving device meets the conditions for performing escape, and accumulating a number of escape attempts once;
the method further comprises:
   before controlling the self-moving device to perform rotation, determining whether the number of escape attempts corresponding to the current rotation direction reaches a preset number;
   if the preset number is reached, then controlling the self-moving device to perform rotation and suspend image acquisition;
   when the self-moving device rotates a second preset angle, restarting image acquisition, and clearing the number of escape attempts to zero.

Optionally, the method further comprises at least one of the following:
if the self-moving device is currently in a dense grass trapped scenario, then before first controlling the self-moving device to perform rotation, controlling the self-moving device to stop a cutting disc and move backward, and controlling the self-moving device to start the cutting disc and begin rotating when moving backward a preset backward distance;
if the self-moving device is currently in a slipping trapped scenario, then controlling the self-moving device to perform first rotation at a first speed, and adopting a different speed for each rotation, the first speed being less than a preset speed.

Optionally, the method further comprises:
if the obstacle exists within the range corresponding to the area to be traveled in the image, then reducing the area to be traveled;
entering the step of detecting whether the obstacle exists within the range corresponding to the area to be traveled in the image.

Optionally, one side of the area to be traveled before reduction is greater than a body width of the self-moving device, and the other side is a second preset distance; one side of the area to be traveled after reduction is smaller than the body by a preset width or equal to the body width, and the other side is a third preset distance, the third preset distance being less than the second preset distance.

Optionally, the controlling the self-moving device to drive out from the area to be traveled to escape when the obstacle does not exist within the range corresponding to the area to be traveled in the image comprises:
if the obstacle does not exist within the range corresponding to the area to be traveled in the image and the self-moving device is currently in a preset trapped scenario, then determining whether a rotated angle in the current rotation direction is greater than a third preset angle;
if the rotated angle is greater than the third preset angle, then controlling the self-moving device to drive out from the area to be traveled to escape.

Optionally, the method further comprises:
if the rotated angle is less than or equal to the third preset angle, then controlling the self-moving device to rotate in the current rotation direction;
entering the step of detecting whether the obstacle exists within the range corresponding to the area to be traveled in the image ahead of the self-moving device.

Optionally, after the detecting whether the self-moving device meets the conditions for performing escape, the method further comprises:
if the conditions for performing escape are met, then determining a trapped scenario of the self-moving device according to the conditions for performing escape met by the self-moving device; the conditions for performing escape comprising at least one of the following:
the self-moving device has collisions greater than the preset number;
driving wheels of the self-moving device are stalled;
a lifting sensor detects that the self-moving device is lifted;
when the self-moving device is mowing grass in place, an actual rotational speed of a cutting disc is less than or equal to a preset rotational speed;
the image acquired by the visual sensor remains unchanged for a preset duration.

Optionally, after controlling the self-moving device to drive out from the area to be traveled to escape, the method further comprises:
determining whether escape is successful;
if escape is successful, then controlling the self-moving device to start working.

The present application further provides a self-moving device, the self-moving device comprising a visual sensor and a controller;
the visual sensor, configured to acquire an image ahead of the self-moving device;
the controller, configured to implement steps of the control method for a self-moving device as described in any one of the above when executed.

The present application further provides a readable storage medium, on the readable storage medium is stored a computer program, the computer program being executed by a processor to implement steps of the control method for a self-moving device as described in any one of the above.

The control method for a self-moving device, a self-moving device and a readable storage medium of the present application, the self-moving device comprising a visual sensor, the visual sensor being configured to acquire an image ahead of the self-moving device, the control method comprising: detecting whether the self-moving device meets conditions for performing escape; if the conditions for performing escape are met, then detecting whether an obstacle exists within a range corresponding to an area to be traveled in the image ahead of the self-moving device; if the obstacle does not exist within the range corresponding to the area to be traveled in the image, then controlling the self-moving device to drive out from the area to be traveled to escape. The present application, based on the image acquired by the visual sensor, detects whether the obstacle exists in the area to be traveled ahead of the self-moving device, and then controls the self-moving device to drive out from an area without obstacles to escape, since a visual recognition makes a travel direction when the self-moving device escapes more targeted, escape efficiency of the self-moving device in complex areas can be effectively improved.

### BRIEF DESCRIPTION OF DRAWINGS

The objects, technical solutions and beneficial effects of the present application described above can be achieved through the following drawings:
FIG.1 is a schematic diagram of an application scenario according to an embodiment of the present application.
FIG.2 is the schematic diagram of an automatic working method according to the embodiment of the present application.
FIG.3 is the schematic diagram of obstacle marking according to the embodiment of the present application.
FIG.4 is the schematic diagram of a scenario where a robot is in a predicament according to the embodiment of the present application.
FIG.5-6 are schematic diagrams of sectors according to the embodiment of the present application.
FIG.7 is the schematic diagram of a scenario where the robot leaves the predicament according to the embodiment of the present application.
FIG.8 is a flowchart of a control method for an autonomous mobile robot according to an embodiment.
FIG.9 is the schematic diagram of a detection scenario according to an embodiment.

### DETAILED DESCRIPTION

The technical solutions in the embodiments of the present application will be clearly and completely described below with reference to the drawings in the embodiments of the present application. Obviously, the described embodiments are only part of the embodiments of the present application, not all embodiments. Based on the embodiments in the present application, all other embodiments obtained by those of ordinary skill in the art without creative work fall within the protection scope of the present application.

The terms used in the specification of the present application herein are only for the purpose of describing specific embodiments and are not intended to limit the present application. Moreover, the term "and/or" used herein includes any and all combinations of one or more related listed items.

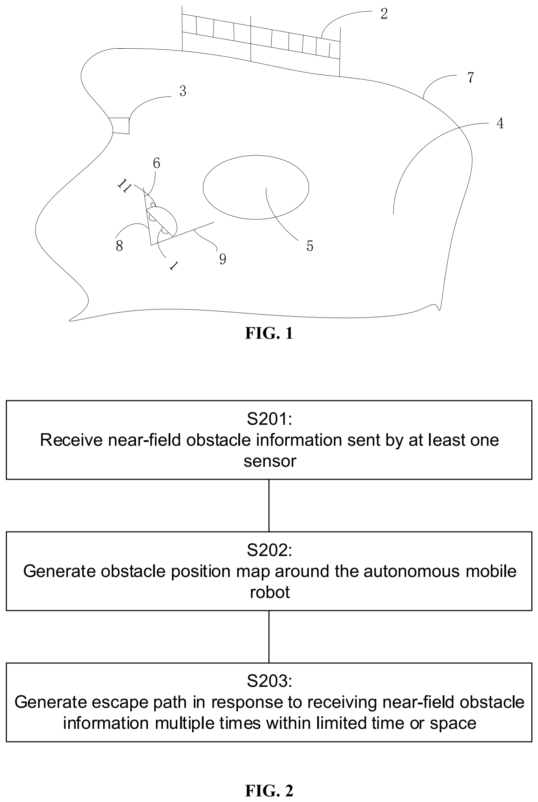

As shown in Figure 1, the automatic working system of the present embodiment may comprise: an autonomous mobile robot 1, a boundary 7, and a base station 3. The autonomous mobile robot 1 moves and works within a working area 4 defined by the boundary 7, and the base station 3 may be used for the autonomous mobile robot to return to supplement energy when energy is insufficient. The boundary 7 may be the periphery of the entire working area, called an outer boundary, usually connected end-to-end to enclose the working area 4, and may be electronic or physical. The physical boundary may simply be a natural physical boundary formed by boundaries between the working area 4 and non-working areas, for example: natural boundaries between grass and non-grass, or boundaries formed by walls, hedges, railings, etc. For example, when a user's lawn is adjacent to a neighbor's lawn, a boundary may be formed through a fence 2 as shown in Figure 1. The electronic boundary may be formed by laying wires around the working area 4 and utilizing virtual boundary signals sent by a boundary signal generating device connected to the wires, such as: electromagnetic signals, acoustic signals or optical signals, etc. There may also be areas 5 in the working area that are not suitable for the autonomous mobile robot 1 to work, and boundaries are formed based on the areas 5, such as: flower beds, pools, obstacles, etc. , which may be called inner boundaries, and parts outside the inner boundaries are working areas.

The autonomous mobile robot 1 may be an automatic lawn mower, a sweeping robot, an automatic snow sweeper, or other equipment suitable for unattended operation. They automatically move on surfaces of working areas to perform lawn mowing, dust suction, or snow sweeping work. Of course, the autonomous mobile robot is not limited to automatic lawn mowers, sweeping robots, and automatic snow sweepers, and may also be other equipment suitable for unattended operation, which is not limited by the present application.

In the following specific embodiments, the automatic working system is taken as an automatic lawn mowing system, i. e. , the autonomous mobile robot 1 is taken as an automatic lawn mower for detailed description.

The automatic lawn mower comprises a housing, a movement module, a working module, a controller, and an energy module. The controller connects and controls the movement module and working module to realize automatic movement and working of the automatic lawn mower. In the embodiment of the present application, the automatic lawn mower may also comprise a visual sensor 11 for collecting images. After collecting images, the automatic lawn mower performs image segmentation on grass, non-grass, soil, fallen leaves, hedges, stone slabs, etc. therein, and controls the lawn mower to move in areas corresponding to segmented grass or other categories that users allow the lawn mower to move in (such as: stone slabs). Working modes of the lawn mower may include but are not limited to at least one of the following: planned path mode, random path mode, boundary-following path mode. The lawn mower may adopt the random path mode to mow grass inside the working area. In this mode, the lawn mower moves forward continuously until non-grass is recognized through the visual sensor. When non-grass is recognized, the lawn mower is controlled to turn. After completing internal grass mowing, a boundary-following movement method may also be adopted to control the lawn mower to travel along boundaries to cut grass on boundaries or return for charging. The automatic lawn mower may also comprise a position detection sensor (such as RTK, IMU, odo, etc. ) for collecting current geographic positions. A map of the working area is established through the position detection sensor, and movement and working of the machine are controlled according to the map. Of course, the solutions in the following embodiments of the present application are also applicable to situations where no visual sensor exists on the automatic lawn mower, where only position detection sensors are provided on the lawn mower, and the map of the working area is established through the position detection sensors.

In the scenario shown in Figure 1, when the automatic lawn mower moves to a small area 6 that is roughly formed into an inner right angle surrounded by obstacle 8 and obstacle 9 during movement in the working area, when the automatic lawn mower encounters obstacle 8, the automatic lawn mower is controlled to move backward according to an obstacle avoidance strategy to avoid the obstacle; during the backward movement process, when the automatic lawn mower encounters obstacle 9 again, the automatic lawn mower is controlled to move forward according to the obstacle avoidance strategy to avoid the obstacle; during the forward movement process, when the automatic lawn mower encounters obstacle 8 again, the automatic lawn mower is controlled to move forward according to the obstacle avoidance strategy to avoid the obstacle; this causes the automatic lawn mower to be trapped in the small area 6. In this scenario, since the automatic lawn mower cannot accurately identify obstacle-free areas, the automatic lawn mower generates a phenomenon of colliding with the small area 6 multiple times but being unable to escape from the predicament of the small area. Alternatively, during the process of the automatic lawn mower moving in the working area, the automatic lawn mower may continuously collide with boundaries intermittently due to inability to accurately identify boundaries. When the boundaries are obstacles such as walls, this may cause the machine to be damaged to a certain extent, but the machine cannot escape from this predicament. Alternatively, when the automatic lawn mower moves to the fence 2 as shown in Figure 1, the automatic lawn mower may be stuck at the fence 2 for a long time without being able to escape. Alternatively, when the automatic lawn mower moves to narrow areas (such as areas surrounded by table legs), due to inability to accurately identify exits that can be driven out, collisions with obstacles (such as table legs) may occur during the process of finding exits in narrow areas, but the machine cannot leave this predicament. All these predicaments mentioned above may cause the machine to be damaged to a certain extent, and may cause low working efficiency of the machine and excessive cutting of parts of the lawn.

In view of the above problems, the present application proposes a control method for an autonomous mobile robot. In the method, near-field obstacle information sent by at least one sensor is received, the at least one sensor being mounted on the autonomous mobile robot;an obstacle position map around the autonomous mobile robot is generated based on the near-field obstacle information; and generate an escape path in response to receiving the near-field obstacle information multiple times within a limited time or space, wherein generating the escape path comprises: searching for a passable direction based on a current position of the autonomous mobile robot and the obstacle position map. Through this method, trapped situations in the above scenarios can be solved, enabling the robot to leave the predicament. Specifically, as shown in Figure 2, the automatic working method comprises the following steps:
S201: Receive near-field obstacle information sent by at least one sensor, the at least one sensor being mounted on the autonomous mobile robot.

In an embodiment of the present application, during movement, the autonomous mobile robot may receive near-field obstacle information sent by at least one sensor. The sensor may be a physically existing sensor, or may be a virtual sensor that identifies obstacles through algorithms, or the sensor that collects certain data through algorithms and receives the data through a controller to identify whether obstacles are encountered. In the drawings of the present application, the sensor is marked and described using the visual sensor 11 as an example.

Specifically, near-field obstacle information (also referred to as obstacles in the following text) characterizes obstacle information that is close to the robot and located around the robot, and may include at least one of the following: collision information indicating a contact collision of the autonomous mobile robot, lifting information indicating a lifting of the autonomous mobile robot, motor torque information indicating a stall of a driving motor of the autonomous mobile robot, or non-contact obstacle remote sensing information indicating presence of an obstacle around the autonomous mobile robot. The obstacle remote sensing information is obtained through an obstacle remote sensing sensor, and the obstacle remote sensing sensor may include but is not limited to at least one of the following: a visual sensor, an ultrasonic sensor, a radar, etc. Specifically, in the embodiments of the present application, the obstacle remote sensing sensor is the visual sensor and the obstacle remote sensing information is an image as an example for description. These near-field obstacle information items corresponding to the machine may be: detecting that a camera has collided, detecting that a driving wheel is stalled, a lifting sensor provided on a universal wheel detecting that the universal wheel is lifted.

S202: Generate an obstacle position map around the autonomous mobile robot based on the near-field obstacle information.

In an embodiment of the present application, the autonomous mobile robot may generate an obstacle position map around the autonomous mobile robot based on the near-field obstacle information. Thus, subsequently the autonomous mobile robot may determine an escape path according to the obstacle position map to facilitate the lawn mower quickly leaving the predicament.

The obstacle position map in the present application may be a working area map sent by a user, or may be a map established by the automatic lawn mower through a satellite positioning sensor or the visual sensor, and obstacle information is marked in the map. This obstacle information is obtained through the above-mentioned collision information, lifting information, motor torque information, or obstacle remote sensing information. The map may be a local map, and the local map may characterize an environment within a certain range centered on the automatic lawn mower (i. e. , areas around the automatic lawn mower), and may be updated as the position of the automatic lawn mower changes. The local map may be obtained based on multiple frames of images within a recent period of time, and the local map may be updated at regular intervals, i. e. , periodically updated. By establishing the local map, machine memory can be saved.

S203: Generate an escape path in response to receiving the near-field obstacle information multiple times within a limited time or space, wherein generating an escape path comprises: searching for a passable direction based on a current position of the autonomous mobile robot and the obstacle position map.

In an embodiment of the present application, and generate an escape path in response to receiving the near-field obstacle information multiple times within a limited time or space may comprise: when it is detected that the automatic lawn mower is trapped, obtaining a map marked with obstacles in areas around the lawn mower, and controlling the lawn mower to move to areas in the map that are not marked as obstacles to leave the predicament.

In an embodiment of the present application, when a robot receives near-field obstacle information multiple times within a limited time or space, it may be determined that the robot is in a predicament. At this time, a passable direction may be searched based on a current position of the autonomous mobile robot and the obstacle position map. After obtaining the passable direction, a path from the current position of the robot to the passable direction may be planned to escape from the predicament, i. e. , escape. In cases where the map is inaccurate or incomplete, controlling the machine to escape from the predicament more quickly can be achieved by searching for the passable direction.

In an embodiment of the present application, when it is recognized that the automatic lawn mower receives near-field obstacle information multiple times within a preset time period during movement or receives near-field obstacle information continuously for a period of time during movement, or when the automatic lawn mower determines that surrounding environments are basically consistent within a preset time period based on multiple frames of images recognized by the visual sensor, it may be determined that the robot is in a predicament. Alternatively, when the automatic lawn mower is turning left, an IMU mounted thereon recognizes that a yaw angle value changes by more than a preset angle value, such as 540 degrees; and a longest side in a circumscribed rectangle of a movement route where the yaw angle value changes is less than or equal to a preset length value, such as 5m, then it can be determined that the automatic lawn mower is in a trapped scenario caused by being unable to get out. When the automatic lawn mower is in a trapped scenario caused by being unable to get out, if it is detected that the automatic lawn mower has one collision or one stall or one lifting, etc. , then it can be determined that the automatic lawn mower is trapped. When the lawn mower receives near-field obstacle information of the above types, it can be determined that the automatic lawn mower is in a predicament, and the solution proposed in the present application can be adopted to control the automatic lawn mower to move to leave the predicament.

In the embodiments of the present application, scenarios where the automatic lawn mower is in a predicament mostly occur in limited spaces, for example: narrow areas. Whether the autonomous mobile robot is trapped and triggers escape actions is determined based on whether collisions, lifting or stalls that meet duration requirements are detected, or whether collisions, lifting or stalls that meet frequency requirements and time interval requirements are detected. Specifically, when 3 consecutive collisions occur with each collision interval being less than 10s, or when collisions are detected continuously within 3s, it may be considered to be in a predicament. When 20 collisions are detected within 5 minutes, it is determined that the scenario encountered by the automatic lawn mower is complex and may not be handled independently, so it will be controlled to stop and issue an alarm to remind the user for assistance. Further, to avoid the automatic lawn mower from falsely detecting collisions, only when collisions are detected continuously within 0.1s will it be determined that one collision has occurred. When lifting is detected 3 consecutive times with the time interval of each detected lifting being less than 10s, or when the automatic lawn mower detects lifting continuously within 3s, it may be considered to be in a predicament. Further, to avoid the automatic lawn mower from falsely detecting lifting, only when lifting is detected continuously within 0.2s will it be determined that one lifting has occurred. When 3 consecutive stalls occur with the interval of each detected stall being less than 10s, or when stalls are detected continuously within 3s, it may be considered to be in a predicament (stalls include left wheel stall or right wheel stall). Further, to avoid the automatic lawn mower from falsely detecting stalls, only when stalls are detected continuously within 3s will it be determined that one stall has occurred. Of course, the detected fault types may also be combinations of collision, lifting or stall, for example: when the automatic lawn mower consecutively detects 1 collision, 1 lifting, and 1 stall, it may be considered to be in a predicament. Of course, the durations and frequencies used to determine being in a predicament in the above embodiments are only examples, and adaptive adjustments may be made according to improvements in detection accuracy of the automatic lawn mower to improve its response time for initiating escape strategies, for example, detecting collisions continuously within 3s for the automatic lawn mower may be adjusted to detecting collisions continuously within 2s, which is not limited by the present application.

Further, when it is detected that the automatic lawn mower is trapped, a local map within a certain range centered on the automatic lawn mower may be obtained, for example: the map may be a rectangular area with the position of the automatic lawn mower as the center and a side length of 2m. Positions on the map corresponding to near-field obstacle information received by the automatic lawn mower may be marked as near-field obstacles. Specifically, the rectangular area may be divided into multiple grids, and values of each grid may be updated according to whether the sensors of the automatic lawn mower recognize obstacles and the types of recognized obstacles. Specifically, grids may be assigned values according to whether obstacles exist at actual working area positions corresponding to each grid and the types of obstacles. For example, if obstacles exist, the grid is assigned a value of 1, and if they do not exist, the value is assigned as 0. When lifting information indicating that the robot is lifted is received, the grid is assigned a value of 1 and the grid type is recorded as lifting. When image information indicating that there are obstacles around the robot is received, the grid is assigned a value of 1 and the grid type is recorded as obstacles recognized by the visual sensor.

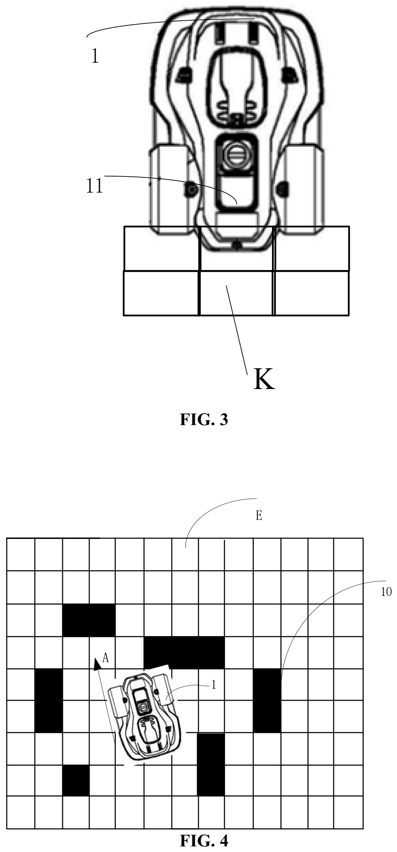

Specifically, as shown in Figure 3, when the lawn mower receives at least one of the following near-field obstacle information during movement, positions on the map corresponding to the near-field obstacle information may be marked as near-field obstacles to generate an obstacle position map around the lawn mower. When the map is a grid map, a fixed number of grids near positions on the map corresponding to sensors or driving wheels that receive obstacle information may be marked as obstacles, or corresponding numbers of grids may be marked as obstacles according to obstacle size and torque magnitude. The larger the obstacle, the more grids are marked. As shown in Figure 3, when near-field obstacle information indicating that a camera has collided is received, 6 grids K in front corresponding to the position where the camera is located on the map may be marked as obstacles, and the types of these grids may be marked as collision; when near-field obstacle information indicating that a universal wheel is lifted is received, 6 grids in front corresponding to the position where the universal wheel is located on the map may be marked as obstacles, and the types of these grids may be marked as lifting. When motor torque information indicating that a driving wheel motor is stalled is received, i. e. , when motor torque is greater than a preset threshold, a movement speed, a movement direction, and a first area covered on the map of the lawn mower are obtained; a second area covered on the map after simulating that the lawn mower moves at the movement speed in the movement direction for a preset time is obtained; an area in the second area not covered by the first area is determined; the uncovered area is marked as a near-field obstacle. The area here may be grids. When the uncovered area is half a grid, the entire grid is marked as a near-field obstacle to ensure safety.

In an embodiment of the present application, searching for a passable direction based on the current position of the autonomous mobile robot and the obstacle position map may comprise: expanding near-field obstacles in the obstacle position map according to an expansion coefficient, the expansion coefficient being approximately equal to a width of the autonomous mobile robot; determining an area in the obstacle position map where the near-field obstacle is absent as the passable direction. By expanding grids marked as obstacles, grids covered when the automatic lawn mower travels to the obstacle are simulated, so that uncovered areas are areas that can be passed through, and the lawn mower can be controlled to move toward directions corresponding to the areas.

Further, when performing expansion, only partial near-field obstacles in the obstacle position map may be expanded, the partial near-field obstacles comprising obstacle remote sensing information representing that there are obstacles around the autonomous mobile robot, i. e. , the grid type is obstacles recognized by the visual sensor. That is, only obstacles in the map where the obstacle type is obstacles recognized through images collected by the visual sensor may be expanded, and areas of other obstacle types are not expanded. The reason for this processing is that when obstacle marking is performed, when other near-field obstacle information is received to mark grids as obstacles, since obstacle sizes cannot be recognized, to avoid missing obstacle information, generally a sufficient number of grids are marked, so additional expansion is not needed. Maps obtained through this method better conform to actual working scenarios, and machines can more easily find directions to leave predicaments.

Further, when performing expansion, grid types that meet requirements in the map may be deleted, and the grid type may be lifting. According to multiple tests by staff, obstacles that cannot be crossed may not actually exist at positions where lifting is detected to occur, so grids of the lifting type in the obstacle position map may be deleted, passable directions may be searched according to the map with these obstacles deleted, and escape paths may be generated. Compared with before deletion, this method increases areas on the map not covered by obstacles, and the obtained map better conforms to actual working scenarios, greatly increasing the probability of the lawn mower escaping.

In an embodiment of the present application, searching for a passable direction based on the current position of the autonomous mobile robot and the obstacle position map may comprise: obtaining a search direction and a search range for the near-field obstacles in the obstacle position map, determining, as the passable direction, a direction within the search range where the near-field obstacle is absent, wherein an initial search direction is a direction opposite to a movement direction of the autonomous mobile robot, and the search range is an area, determined by the search direction, that exceeds an area covered by the autonomous mobile robot on the map. That is, when it is detected that the lawn mower is trapped, a map of areas near the lawn mower is first obtained, and then with the position where the lawn mower is located as the center, obstacle conditions in areas larger than the area covered by the lawn mower in the grid map are obtained. For example, with the position where the center of gravity of the lawn mower is located as the center, a circular area may be determined with a radius greater than the body length of the lawn mower, and directions in the grid map located in the circular area where no near-field obstacles exist may be obtained as passable directions.

Further, when the body of the lawn mower is divided into two parts with unequal front and rear lengths, correspondingly the search range for obstacles on the map may also be divided into two unequal parts, searching for obstacles in these two parts of the map respectively. For example: the front half of the body covers 4 grids in the map in the length direction, the rear half covers 8 grids in the map in the length direction, and the body covers 10 grids in the map in the width direction. Therefore, in the map corresponding to the front half of the body, with the position where the lawn mower is located as the center, obstacle information covered by a semicircle with a radius of 8 grids (40cm) may be obtained; in the map corresponding to the rear half of the body, with the position where the lawn mower is located as the center, obstacle information covered by a semicircle with a radius of 10 grids (40cm) may be obtained.

Further, the search range may also be determined according to an area determined by the search direction that exceeds the area covered by the autonomous mobile robot on the map, and the search direction used in the first search is opposite to the robot movement direction. By setting the search range, the data computation amount when the lawn mower searches for escape paths can be reduced. For example, in an embodiment, when it is detected that the lawn mower is in a predicament, the body linear velocity direction is first obtained. If the linear velocity direction is forward, a semicircular coverage area obtained with the center of gravity position of the machine as the center and 10 grids of the rear half of the body as the radius in the map is obtained as the search range.

In the embodiments of the present application, during the process of searching for passable directions, when passable directions exist in the initial search direction and search range, during subsequent movement processes, the initial search direction and search range remain unchanged, and only obstacle information in the initial search direction and search range is obtained continuously. For example: when it is determined that passable directions exist behind the lawn mower in the map when trapped, only the rear map is obtained during subsequent continued escape processes. By controlling the machine to move continuously in the same direction through this method, the lawn mower is prevented from repeatedly switching search directions and search ranges, which would cause defects such as the lawn mower choosing to move forward when passable directions exist ahead, and choosing to move backward when passable directions exist behind, resulting in such oscillating movement of the lawn mower back and forth.

For obstacles in the map where the obstacle type is lifting, the search direction and search range may be determined according to the installation position of the lifting sensor on the lawn mower, and the search direction and search range remain unchanged throughout the entire escape process. Specifically, when the installation position is at the rear of the body, the search direction is the lawn mower movement direction, and the search range is a range in the map that exceeds the range covered by the front half of the body, i. e. , the lawn mower will move forward to escape; when the installation position is at the front of the body, the search direction is a direction opposite to the lawn mower movement direction, and the search range is a range in the map that exceeds the range covered by the rear front half of the body, i. e. , the lawn mower will move backward. Through this processing method, the lawn mower can pass through the position where lifting occurs as quickly as possible to leave the predicament.

In an embodiment of the present application, when it is detected that the automatic lawn mower is trapped, a map of areas around the lawn mower is obtained. When multiple unmarked areas exist, according to distances between the lawn mower and unmarked areas, the lawn mower is controlled to move to nearby areas or directions to escape. Preferably, when the front exists, the lawn mower moves forward directly.

In an embodiment, when an escape path cannot be generated, areas in directions opposite to the initial search direction in the map are searched, and when a passable direction is found, the lawn mower is controlled to travel in that direction. As in the above embodiment, when it is detected that the lawn mower is trapped, the body linear velocity direction is first obtained. If the linear velocity direction is straight ahead, a semicircular coverage area obtained with the machine position as the center and 10 grids of the rear half of the body as the radius in the map is obtained as the search range. If a passable direction cannot be found within the search range, the search direction is switched to a semicircular coverage area obtained with 8 grids of the front half of the body as the radius as the search range.

In an embodiment, when obstacles exist within search ranges in both front and rear directions of the lawn mower on the map and an escape path cannot be generated, the search range is reduced, but the search range is larger than the lawn mower body range, and the passable direction is determined according to the method of reducing the search range.

In an embodiment, as the current position of the lawn mower is updated and the obstacle position map is updated, the passable direction is correspondingly adjusted. As the current position of the lawn mower is updated, the lawn mower movement direction is correspondingly updated, the initial search direction and search range are also correspondingly updated, and the obstacle position map is continuously updated with collected near-field obstacle information. However, since the selected passable direction is the direction closest to the lawn mower, the passable direction can basically remain unchanged, unless the lawn mower position or obstacle position map changes significantly.

In an embodiment, during the process of controlling the autonomous mobile robot to travel toward the passable direction, when the time of receiving obstacles is less than a preset time threshold, the robot is controlled to continue searching for passable directions in a direction consistent with the initial search direction; when greater than the preset time threshold, passable directions are re-searched according to the method in the present application, and at this time, the passable direction may be a direction opposite to the initial search direction. Since obstacles may be temporary obstacles or obtained from false detection by the machine, the robot is controlled to re-search for passable directions only when new obstacles are detected for a long time or multiple times, ensuring stability of the robot movement process.

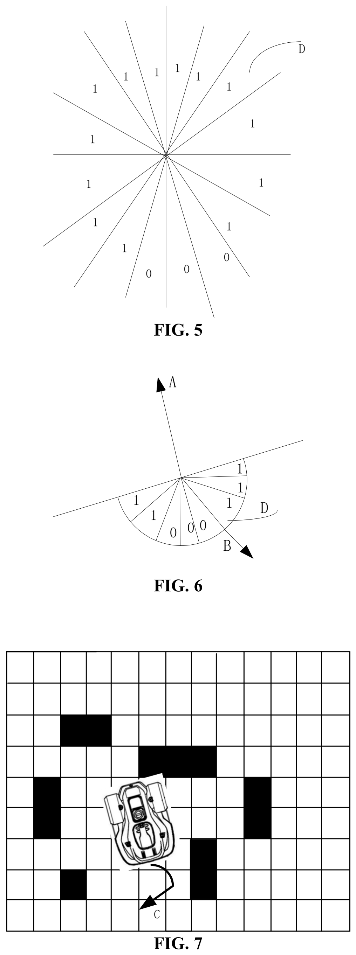

In another embodiment, searching for a passable direction based on the current position of the autonomous mobile robot and the obstacle position map may comprise: drawing multiple sectors D on the map with the center of gravity of the automatic lawn mower as the center, assigning values to each sector according to whether the sector passes through obstacles, with no value assigned when not passing through obstacles. The lawn mower is controlled to move toward directions where sectors in the sectors are not assigned values. Specifically, taking the predicament scenario shown in Figure 4 as an example, with the lawn mower as the center on the map, multiple rays as shown in Figure 5 are drawn at equal angles within a 360-degree range around the lawn mower, two adjacent rays determine one sector, obtaining N sectors. Sector values in each direction are determined according to whether obstacles exist in grids covered by each sector. When obstacles exist, the sector value in that direction is marked as 1;and distances of obstacles closest to the lawn mower relative to the lawn mower in map grids covered by sectors in each direction are obtained. According to the distance 2D relative to the lawn mower obtained in each sector, body width d, and sector resolution (2π/N), the number of sectors that need to be expanded for the sector is determined. At this time, the calculation method for the number of sectors that need to be expanded for each sector is: (arcsin(d/D))/ (2π/N). The number of sectors that need to be expanded characterizes the number of sectors that will be covered when the lawn mower moves to the sector. For example: if the calculated number of sectors is 2, sector values of 4 sectors near the current sector may be marked as 1. Ray directions of sectors with sector values of 0 are obtained, and the directions or sector areas may be passable directions or areas where the lawn mower can escape. Further, the sector ray direction may be the direction closest to the current movement direction of the lawn mower. By simulating areas that will be covered when the lawn mower reaches obstacles through sectors, compared with the method of simulating grids covered when the body is located at each obstacle in the above embodiments, the sector simulation method does not need to simulate all grids covered when the machine moves to obstacles. Therefore, while ensuring that obstacles around the lawn mower are all simulated and covered, there is no redundancy and the algorithm is simpler. Therefore, when the lawn mower detects that it is trapped, it can leave the predicament direction more quickly.

In another embodiment of the present application, when obstacles exist, the sector value in that direction is marked as 1 and the fault type is recorded. When expanding sectors, only fault types that are obstacles recognized through images collected by visual sensors may be expanded, and other types of areas are not expanded. The reason for this processing is that other fault types have already marked sufficient grids, so additional expansion is not needed. Obstacle areas marked through this method better conform to actual situations of obstacles, and machines can more easily find directions to leave predicaments.

In an embodiment of the present application, when the autonomous mobile robot cannot search for a passable direction, the autonomous mobile robot is controlled to ignore the obstacle position map and adjust a pose, and pose adjustment methods may include but are not limited to at least one of the following: moving forward, moving backward, rotating; searching for a passable direction according to a current position of the autonomous mobile robot after pose adjustment and the obstacle position map. When the lawn mower detects that it is in a predicament, if passable directions cannot be found by moving forward or backward using the methods in the above embodiments combined with the map, the lawn mower may be controlled to rotate directly in place and search for passable directions at the position after rotation; when the lawn mower detects that it is in a predicament, if near-field obstacle information such as lifting, collision, or torque can still be received after the lawn mower moves in an arc forward for a relatively long time using the methods in the above embodiments, the lawn mower may be controlled to move forward for a distance and rotate, and search for passable directions at the position after rotation.

Further, after the lawn mower adjusts its pose, near-field obstacles identified in real-time by the visual sensor when the lawn mower is at the current position are re-obtained. When identified near-field obstacles are inconsistent with corresponding visually recognized obstacle positions in the obstacle position map, the map is updated according to near-field obstacles identified in real-time by the visual sensor, and a passable direction is searched according to the current position of the lawn mower after pose adjustment and the updated obstacle position map.

After determining the passable direction, a movement angular velocity and a movement linear velocity are determined according to an angle difference between a movement direction of the autonomous mobile robot and the passable direction, the autonomous mobile robot is controlled to move toward the passable direction according to the movement angular velocity and the movement linear velocity, wherein the movement angular velocity is positively correlated with the angle difference, and the movement linear velocity is negatively correlated with the angle difference. For example: for the above sector embodiment, if the distance between the current direction of the lawn mower and the target ray direction is greater than N/4, the linear velocity is set to 0.03m/s and the angular velocity is set to 0.025 m/s × d; if the distance between the current direction of the lawn mower and the target ray direction is less than N/4 and greater than N/6, the linear velocity is set to 0.05 m/s and the angular velocity is set to 0.02 m/s × d. Through this velocity setting method, the lawn mower can turn to the target position or target direction more quickly when position changes are relatively small.

Further, when the passable direction is rearward, the lawn mower is controlled to escape by moving backward in an arc or moving backward according to the movement angular velocity and movement linear velocity; when the passable direction is forward, the lawn mower is controlled to escape by moving forward in an arc or moving straight according to the movement angular velocity and movement linear velocity.

In an embodiment of the present application, during the process of controlling the autonomous mobile robot to move toward the passable direction, whether the autonomous mobile robot can rotate is determined according to the obstacle position map around the autonomous mobile robot; if rotation is possible, the autonomous mobile robot is controlled to rotate, and whether the current direction is a passable direction is confirmed according to the position after rotation.

Whether the autonomous mobile robot can rotate is determined by calculating whether obstacles exist in the map covered after the autonomous mobile robot rotates according to preset angles. For example: simulating whether obstacles exist in areas covered on the map when the lawn mower moves to multiple preset angles, and if they do not exist, it indicates that rotation is possible. The preset angles may be counterclockwise 30 degrees, 60 degrees, 90 degrees, 120 degrees, 150 degrees, 180 degrees, clockwise 30 degrees, 60 degrees, 90 degrees, 120 degrees, 150 degrees, 180 degrees, with priority given to searching in the counterclockwise direction consistent with the boundary-following direction of the lawn mower. When a rotatable direction is found, the robot is controlled to rotate toward that direction, a passable direction is searched according to the position after rotation, and when recognized, the lawn mower is controlled to travel straight along that direction. It may be that during the rotation process, whether the current direction is a passable direction is confirmed in real-time, or the lawn mower may be controlled to stop every time it rotates a certain angle to confirm whether the current direction is a passable direction. Preferably, an initial rotation direction is determined according to the boundary-following direction of the lawn mower. When the boundary-following direction is counterclockwise, the preferred initial direction is counterclockwise. When the lawn mower rotates in that direction, it can quickly track the boundary. When counterclockwise rotation is not possible, it switches to determining whether clockwise rotation is possible. If neither is possible, it continues to move toward the previously searched passable direction.

In an embodiment of the present application, during the process of controlling the autonomous mobile robot to rotate, whether near-field obstacles exist ahead is determined through obstacle remote sensing information collected in real-time by an obstacle remote sensing sensor, the obstacle remote sensing sensor being mounted on the autonomous mobile robot, the obstacle remote sensing sensor being configured to identify obstacle remote sensing information around the autonomous mobile robot; when it is determined that near-field obstacles do not exist, the direction is treated as a passable direction, and the autonomous mobile robot is controlled to move along the direction. For example: during the lawn mower rotation process, whether non-obstacle areas that can accommodate the body width exist ahead is identified through images collected by the visual sensor, and if they exist, the lawn mower is controlled to move toward that direction. Specifically, methods for visually identifying whether non-obstacle areas that can accommodate the body width exist ahead include: performing segmentation processing on images, intercepting approximately rectangular areas in images (with the expected straight travel range as one side and the body width or slightly less than the body width as the other side). A preset proportion of obstacle area to the entire area is calculated according to pixel points in the intercepted image. If it is below the preset proportion (for example 5%), it indicates no obstacles and the autonomous mobile robot can pass through.

Further, whether near-field obstacles exist ahead may be determined through obstacle remote sensing information collected in real-time by the obstacle remote sensing sensor and the obstacle position map. The sector where the machine head is located during the lawn mower rotation process is taken as the search range, and whether the sector is a passable direction is determined in combination with the obstacle position map; further, whether non-obstacle areas that can accommodate the body width exist ahead is identified in combination with images collected by the visual sensor, and if the conclusions of both are consistent, the lawn mower is controlled to move along that direction.

Multiple embodiments described in the embodiments of the present application, including deleting lifted grid types, selection of search directions and search ranges, maintaining initial search directions and switching search directions when escape paths cannot be generated, switching search directions when obstacles are detected during travel toward passable directions, and drawing sectors to determine passable directions, can be used separately individually to search for passable directions in combination with obstacle position maps, or can be used in multiple combinations. For example, deleting lifted grid types, selection of search directions and search ranges, maintaining initial search directions and switching search directions when escape paths cannot be generated, and switching search directions when obstacles are detected during travel toward passable directions can be applied to drawing sectors to determine passable directions, which is not limited by the present application.

In another embodiment of the present application, searching for a passable direction based on the current position of the autonomous mobile robot and the obstacle position map may also comprise: with the position where the lawn mower is located as the center on the map, randomly generating multiple movement directions, simulating positions that will be reached after moving along these directions, identifying whether these positions overlap with obstacle points (grids with values of 1);selecting movement directions without overlap; calculating evaluation parameters for each movement direction without overlap, the evaluation parameters being related to distances between positions reached by the lawn mower after simulated movement and obstacle points, for example: 80/square of distance, selecting directions with small evaluation parameters as movement directions for the machine to escape.

In an embodiment of the present application, if it is detected that the lawn mower is in a predicament, it can be controlled to continue working. During the working process, when it is detected that slipping, collision, lifting, motor stall or other abnormalities still occur, the controller stops working to avoid excessive cutting in certain areas.

After detecting that the autonomous mobile robot is trapped, when the autonomous mobile robot travels along the escape path for at least a first preset distance, it is determined that escape is successful. For example: when a predicament is detected, when it is recognized that after a real collision is resolved and the robot travels at least 15cm, escape is determined to be successful.

After determining that the lawn mower has successful escape, areas covered by the lawn mower in the map when trapping is detected are marked as obstacles. During subsequent path planning processes, paths are re-planned according to the re-marked map to travel along working area boundaries or planned paths. Through this method, subsequent movement processes are prevented from causing the machine to mistakenly move to the trapped area again, resulting in reduced working efficiency.

After determining that the autonomous mobile robot has successful escape, when it is detected that the autonomous mobile robot moves to within a second preset distance from the trapped position, obstacles marked in the map due to faults detected by sensors mounted on the autonomous mobile robot are deleted. For example, after determining that the lawn mower has successful escape, when it is detected that the lawn mower moves to within 5m of the trapped position, obstacles marked due to abnormal conditions such as camera collision, torque changes, or universal wheel lifting are deleted. When map accuracy is low, as the lawn mower movement time increases, the accuracy of obstacle marking positions will also decrease, so they can be deleted. Since visual sensors update data with captured images, obstacles marked by them can be retained.

In an embodiment of the present application, in the inner right angle scenario as shown in Figure 1, when multiple collisions are detected, if the above embodiments of sectors and search ranges are adopted, it may be found that 2/3 of half sectors in the rear part are marked as 1, and 1/2 of the other half sectors are marked as 1. When this scenario is recognized, the machine may be controlled to travel with faster angular velocity and slower linear velocity, thereby leaving the inner corner more quickly.

In the embodiments of the present application, near-field obstacle information sent by at least one sensor is received, an obstacle position map around the autonomous mobile robot is generated based on the near-field obstacle information; an escape path is generated in response to receiving the near-field obstacle information multiple times within a limited time or space, wherein generating an escape path comprises: searching for a passable direction based on a current position of the autonomous mobile robot and the obstacle position map. Compared with the method of detecting that a robot is in a predicament and controlling it to randomly collide in various directions to escape, adopting the method in the present application allows the lawn mower to quickly escape, improving working efficiency.

The following uses an application scenario as an example to illustrate the embodiments of the present application. In the scenario shown in Figure 4, during the lawn mower travel process, multiple collisions occur with multiple obstacles 10 within limited space, indicating that the lawn mower is in a predicament. Based on received near-field obstacle information, an obstacle position map E around the lawn mower is generated, and the map is a local map E. It is known that the most recent collision of the lawn mower occurred in direction A during diagonal movement, so the semicircle in Figure 6 is obtained with the rear half of the machine as the search range. According to local map E, sectors as shown in Figure 6 are marked, marking positions where local map E is marked as 1 in each sector as 1. Obstacles in sectors are expanded according to (arcsin(d/D))/ (2π/N), obtaining the sector diagram with marked values as shown in Figure 6. Direction B corresponding to the sector with a value of 0 closest to direction A in the semicircle is obtained as the passable direction. According to the angle difference between direction A and passable direction B, the movement linear velocity and movement angular velocity for the machine to move backward in an arc are determined, and the lawn mower is controlled to travel backward in an arc according to passable direction B as shown in Figure 6. During travel toward direction B, the obstacle position map determines that the lawn mower can rotate, so the lawn mower is controlled to rotate. According to multiple positions during rotation, it is determined that the lawn mower can pass through the front direction corresponding to direction C, so the lawn mower is controlled to move along direction C as shown in Figure 6. After moving straight along direction C for a period of time, it is determined that the lawn mower has successful escape.

In addition, another embodiment is provided, which is an autonomous mobile robot, comprising:
a processor;
a memory for storing processor-executable instructions;
a processor configured to execute the above method.

The above methods can all be executed in the controller of the lawn mower. When obstacle detection and the like are involved, relevant information may be detected through sensors, and after detecting the information, it is sent to the controller to execute corresponding methods through controlling it. The present application does not elaborate on this.

In addition, another embodiment is provided, which is a computer-readable storage medium, the storage medium storing a computer program, the computer program being used to execute the above method.

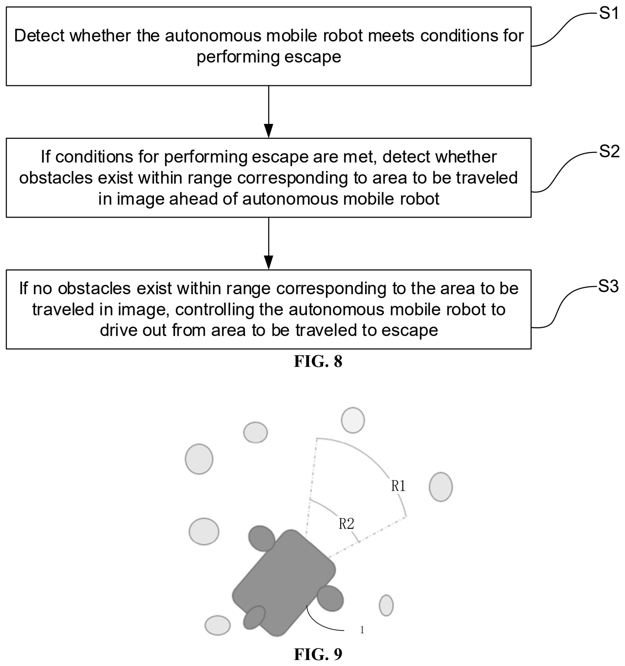

Another embodiment of the present application also provides a control method for an autonomous mobile robot as shown in Figure 8. In this embodiment, the area to be traveled and the passable direction have basically the same meaning, comprising the following steps:
S1, detecting whether the autonomous mobile robot meets conditions for performing escape;
S2, if conditions for performing escape are met, detecting whether obstacles exist within a range corresponding to an area to be traveled in an image ahead of the autonomous mobile robot;
S3, if no obstacles exist within the range corresponding to the area to be traveled in the image, controlling the autonomous mobile robot to drive out from the area to be traveled to escape.

The autonomous mobile robot comprises a visual sensor, the visual sensor being used to acquire images ahead of the autonomous mobile robot, and the visual sensor may be a camera, for example. Through the above method, when the autonomous mobile robot meets conditions for performing escape, based on images acquired by the visual sensor, whether obstacles exist in the area to be traveled ahead of the autonomous mobile robot is detected, and then the autonomous mobile robot is controlled to drive out from areas without obstacles to escape. Since visual recognition makes the travel of the autonomous mobile robot more targeted when escaping, the escape efficiency of the autonomous mobile robot in complex areas can be effectively improved.

The conditions for performing escape comprise at least one of the following:
the autonomous mobile robot has collisions greater than a preset number of times;
driving wheels of the autonomous mobile robot are stalled;
a lifting sensor detects that the autonomous mobile robot is lifted;
when the autonomous mobile robot is mowing grass in place, actual rotational speed of a cutting disc is less than or equal to a preset rotational speed;
images acquired by the visual sensor remain unchanged for a preset duration.

Optionally, different conditions met by the autonomous mobile robot for performing escape indicate that the device is in different trapped scenarios. Among them, the autonomous mobile robot having collisions greater than a preset number of times, driving wheels of the autonomous mobile robot being stalled, and a lifting sensor detecting that the autonomous mobile robot is lifted usually occur in narrow areas or scenarios where multiple columns exist in areas, i. e. , multiple collision trapped scenarios. For lawn mowers, when the autonomous mobile robot is mowing grass in place and the actual rotational speed of the cutting disc is <55%, this usually occurs in dense grass scenarios, i. e. , dense grass trapped scenarios. Specific triggering methods include: when it is detected that the actual rotational speed of the cutting disc is less than or equal to a preset rotational speed and the actual torque of the cutting disc is >90%, the machine is controlled to mow grass in place. During the process of mowing grass in place, if it is detected that the actual rotational speed of the cutting disc is <55%, it indicates that the machine encounters dense grass. Images acquired by the visual sensor remaining unchanged for a preset duration usually occurs in slipping scenarios, indicating that the machine has no displacement but driving wheels are spinning, i. e. , slipping trapped scenarios. Optionally, trapped scenarios of the autonomous mobile robot may be determined according to conditions for performing escape met by the autonomous mobile robot, and then different escape strategies may be executed according to different trapped scenarios. When equipment is trapped, it may be working or not working.

The area to be traveled is an area within a certain range ahead of the autonomous mobile robot, being an area in real environmental space. When detecting whether obstacles exist within a range corresponding to the area to be traveled in images ahead of the autonomous mobile robot, the area of the image to be detected is the area where the area to be traveled is projected into the image.

To provide a success rate for escape, the area to be traveled may be determined within two layers of distance ranges. Please refer to Figure 2, one layer is to determine the area to be traveled within the R1 range, and one layer is to determine the area to be traveled within the R2 range. Since ideal obstacle-free areas cannot be detected within the R1 range, it may be because obstacles exist at boundaries approximately the same size as the device body width, and such obstacles may not actually affect device movement. Therefore, the range can be appropriately reduced, and determining the area to be traveled within the R2 range can more effectively provide a success rate for device escape.

The area to be traveled may be a nearly rectangular area within a certain range ahead of the autonomous mobile robot. To enable the autonomous mobile robot to travel relatively smoothly for escape, one side of the area to be traveled may be selected to be greater than the body width of the autonomous mobile robot, and the other side may be a second preset distance, the second preset distance being a distance in the travel direction of the autonomous mobile robot, corresponding to R1. To enable the autonomous mobile robot to travel to a certain degree in complex areas to ensure escape, one side of the area to be traveled may be selected to be smaller than the body by a preset width or equal to the body width, and the other side may be a third preset distance, the third preset distance being a distance in the travel direction of the autonomous mobile robot, corresponding to R2, where the third preset distance is less than the second preset distance. In actual implementation, the above two different ranges of areas to be traveled may be used at different stages of escape to effectively improve the success rate of autonomous mobile robot escape.

Optionally, the method of the present application further comprises:
if obstacles exist within the range corresponding to the area to be traveled in the image, controlling the autonomous mobile robot to rotate;
entering the step of detecting whether obstacles exist within the range corresponding to the area to be traveled in images ahead of the autonomous mobile robot.

Optionally, before rotation, the autonomous mobile robot may first execute a backward operation, moving away from detected obstacles through backward movement. If abnormal conditions occur during the backward process, such as detecting obstacles, a rotation operation may be initiated.

Optionally, if obstacles exist within the range corresponding to the area to be traveled in the image, the autonomous mobile robot may be controlled to rotate in any direction;the machine rotation direction may also be controlled according to whether collisions that occurred when trapping was detected were virtual collisions or physical collisions;the machine rotation direction may also be determined according to obstacle positions in images captured by cameras. For example: in cases where escape has already been performed once due to virtual collision, if virtual collision occurs again, the machine may be controlled to continue rotating in the same rotation direction as during the previous escape. Of course, considering issues such as stability during machine operation, before rotation, the machine may first be controlled to remain stationary for 500ms, waiting for machine performance to stabilize before executing subsequent operations.

Optionally, if obstacles exist within the range corresponding to the area to be traveled in the image, controlling the autonomous mobile robot to rotate comprises:
if obstacles exist within the range corresponding to the area to be traveled in the image, determining whether the autonomous mobile robot has rotated a first preset angle in a current rotation direction;
if the first preset angle has not been rotated, controlling the autonomous mobile robot to rotate in the current rotation direction.

Optionally, if obstacles exist within the range corresponding to the area to be traveled in the image, controlling the autonomous mobile robot to rotate further comprises:
if the first preset angle has been rotated, reducing the area to be traveled, and controlling the autonomous mobile robot to rotate in a direction opposite to the current rotation direction.

The one side of the area to be traveled before reduction is greater than the body width of the autonomous mobile robot, and the other side is a second preset distance. The one side of the area to be traveled after reduction is smaller than the body by a preset width or equal to the body width, and the other side is a third preset distance, the third preset distance being less than the second preset distance.

The autonomous mobile robot first rotates at low speed along a certain direction to search for passable exits (for example, forward rotation, with a rotation speed of 10cm/s), detecting through a visual sensor whether obstacle-free areas that can accommodate machine movement exist within the R1 range (for example, 30cm) ahead. The detection width at this time may be slightly greater than the machine width to ensure that the machine can escape smoothly. That is, at this time, one side of the area to be traveled is greater than the body width of the autonomous mobile robot, and the other side is a second preset distance. If obstacle-free areas exist within the R1 range, the autonomous mobile robot is controlled to move toward the direction where the obstacle-free areas are located, and after continuously moving for a certain duration (for example, 4s), it is confirmed that the trapped area has been exited, escape is successful, escape mode is released, and working mode is re-entered. If obstacles appear again within the R1 range, the above strategy is repeated for escape.

If the autonomous mobile robot still does not detect obstacle-free areas within the R1 range ahead after rotating a first preset angle (for example, 270 or 360 degrees, at which point one complete cycle has been detected according to the visual angle range of the visual sensor), this indicates that there are no obstacle-free areas within the R1 range. At this time, the detection radius is reduced to the R2 range (for example, 10cm), and the autonomous mobile robot is controlled to rotate in the same or opposite direction to detect obstacle-free areas. The detection width at this time may be the body width of the autonomous mobile robot or slightly less than the machine width (for example, the body width minus the width of one wheel), to ensure that the machine can escape. That is, at this time, one side of the area to be traveled is greater than the body width of the autonomous mobile robot, and the other side is a third preset distance. In actual implementation, when the detection radius is reduced to the R2 range, it is preferable to switch to rotating in the opposite direction, because the 30cm range has already been detected before changing direction, which can improve detection efficiency. When the machine detects obstacles, non-grass, magnetic strips, or other conditions that prevent it from continuing to rotate during the above process of rotating the first preset angle, the machine may initiate reverse rotation or reduce the detection radius to the R2 range and initiate reverse rotation.

If obstacle-free areas exist within the R2 range, the autonomous mobile robot is controlled to move toward the direction where the obstacle-free areas are located, and after continuously moving for a certain duration (for example, 4s) or a certain distance, it is confirmed that the trapped area has been exited, escape is successful, escape mode is released, and working mode is re-entered. If obstacles appear again within the R2 range, the above strategy may continue to be repeated within the R1 range or R2 range for escape.

During the process of detecting obstacle-free areas, when obstacles are detected, obstacle positions and their angles may be recorded.

The third preset distance may be selected based on the performance of the autonomous mobile robot. For example, the performance of the autonomous mobile robot determines that when the autonomous mobile robot discovers obstacles or boundaries within a 10cm range, based on recognition processing response time for images and machine reaction time, the equipment can stop before hitting obstacles or boundaries, then the third preset distance may be selected as 10cm or slightly greater than 10cm. Thus, safety during equipment movement is ensured.

The processing method for detecting whether obstacles exist within the range corresponding to the area to be traveled in images ahead of the autonomous mobile robot is: performing segmentation processing on images, intercepting approximately rectangular areas in images (30cm/10cm as one side, body width or slightly less than body width as the other side). According to pixel points in intercepted images, it is calculated whether obstacle area accounts for a preset proportion (for example, 5%) or less of the entire area. If it is the preset proportion or less, this indicates no obstacles and the autonomous mobile robot can pass through.

The first problem faced by the autonomous mobile robot when detecting being trapped is that if it continues to move in the original direction, it cannot move. After being able to move through certain strategies, there will be problems of being unable to escape from the predicament. Therefore, when the autonomous mobile robot detects being trapped, it first solves the inability to move. Solutions for inability to move include: moving backward, rotating, moving forward, and other measures. Among them, it may move backward first before rotating. When moving backward, each backward movement is less than one body length to ensure safety. When the equipment is not in abnormal states such as stalling or lifting after moving backward, the autonomous mobile robot may be controlled to rotate. Otherwise, the autonomous mobile robot is controlled to move forward and then rotate. Of course, in actual implementation, it is not necessary to move backward first and then rotate; rotation may also be performed directly in place. During the rotation process, the above strategy is adopted to search for obstacle-free areas.

In the embodiments of the present application, when the machine moves backward, it may adopt straight backward movement or arc backward movement, and may also select arc backward movement or straight backward movement strategies according to collision types (virtual collision and physical collision). When abnormalities are detected during the machine backward movement process, the machine may be controlled to rotate to attempt to escape from the predicament. When the machine is determined to be trapped due to direct contact physical collision between the machine and obstacles, since such direct contact collision may cause machine position offset, the machine position after offset may be a position that can escape, so when the machine detects being trapped, it may adopt straight backward movement. When the machine is determined to be trapped without direct contact physical collision between the machine and obstacles, for example, when a camera on the machine captures obstacles in the walking direction requiring escape, arc backward movement may be adopted. Since the camera captures a relatively wide range, adopting arc backward movement increases backward randomness and improves the probability of successful escape.

During the image collection process, based on the rotation speed of the autonomous mobile robot and the speed of image collection by the visual sensor, images may be collected when the equipment rotates a certain angle, achieving equal-interval image collection (for example, approximately one image is collected every 4 degrees of rotation). When the autonomous mobile robot rotates faster or the collection speed is faster, the angular interval for image collection will be reduced.

Optionally, if no obstacles exist within the range corresponding to the area to be traveled in the image, after controlling the autonomous mobile robot to drive out from the area to be traveled to escape, the method further comprises:
determining whether the distance that the autonomous mobile robot drives out from the area to be traveled is less than a first preset distance;
if less than the first preset distance, determining that the autonomous mobile robot meets conditions for performing escape, and accumulating the number of escape attempts once;

The method of the present application further comprises:
before controlling the autonomous mobile robot to rotate, determining whether the number of escape attempts corresponding to the current rotation direction reaches a preset number;
if the preset number is reached, controlling the autonomous mobile robot to rotate and suspend image acquisition;
when the autonomous mobile robot rotates a second preset angle, restarting image acquisition and clearing the number of escape attempts to zero.

The first preset distance may be equal to or less than the third preset distance. After determining that the current area to be traveled has no obstacles, if the travel distance is less than the area to be traveled, this indicates the possibility of misidentification. For example, when the body is tilted, it may cause misidentification of passable areas. To avoid defects of low efficiency caused by multiple failed attempts to escape from predicaments due to such situations, when the number of escape attempts reaches a preset number (for example, 4 times) each time, the autonomous mobile robot is forced to rotate a second preset angle (for example, a random angle of 20-70 degrees or 25-75 degrees) and then re-collect images for detection. When the machine attempts to escape more than a certain number of times, for example, 8 times, it indicates that machine escape has failed, thus controlling the machine to stop.

Optionally, the method of the present application further comprises:
if obstacles exist within the range corresponding to the area to be traveled in the image, reducing the area to be traveled;
entering the step of detecting whether obstacles exist within the range corresponding to the area to be traveled in the image.

When obstacles exist within the range corresponding to the area to be traveled in the image, the area to be traveled may also be reduced without rotating and/or without changing the rotation direction, and further detection of whether obstacles exist within the range corresponding to the area to be traveled in the image may be performed to attempt escape.

The above escape strategies are applicable to multiple collision trapped scenarios. In multiple collision trapped scenarios, adopting smaller angular intervals for image collection and/or smaller rotation speeds can prevent the machine from missing exits that can escape from predicaments.

Optionally, the method of the present application further comprises at least one of the following:
if the autonomous mobile robot is currently in a dense grass trapped scenario, before first controlling the autonomous mobile robot to rotate, controlling the autonomous mobile robot to stop the cutting disc and move backward, and controlling the autonomous mobile robot to start the cutting disc and begin rotating when moving backward a preset distance;
if the autonomous mobile robot is currently in a slipping trapped scenario, controlling the autonomous mobile robot to perform first rotation at a first speed, and adopting different speeds for each rotation, the first speed being less than a preset speed.

When the autonomous mobile robot is currently in a dense grass trapped scenario, in addition to the above strategies applicable to multiple collision trapped scenarios, before first controlling the autonomous mobile robot to rotate, the autonomous mobile robot is controlled to stop the cutting disc and move backward, and when moving backward a preset distance, the autonomous mobile robot is controlled to start the cutting disc and begin rotating. The difference from multiple collision trapped scenarios is that dense grass is generally a large area. When dense grass is detected, the machine stops the cutting disc and moves backward. After retreating to a certain position, it starts the cutting disc and turns at a large angle, which can improve working efficiency.

When the autonomous mobile robot is currently in a slipping trapped scenario, in addition to the above strategies applicable to multiple collision trapped scenarios, the autonomous mobile robot is controlled to perform first rotation at a first speed, and different speeds are adopted for each rotation, the first speed being less than a preset speed. Thus, by starting at low speed and frequently switching the rotational speed of driving wheels, the machine generates relative motion with the ground due to inertia, thereby increasing the possibility of escape, preventing defects where the machine cannot escape from predicaments when adopting the same speed or where grass is pressed down and pits are enlarged when adopting higher speeds, making escape even more impossible. In slipping trapped scenarios, the autonomous mobile robot may also adopt backward, rotation, and forward movements for escape. When moving backward, the movement speed is a fixed value. For each rotation or each forward movement, the rotation or forward speed is adjustable (for example, 10cm/s->20cm/s->30rpm/s). During initial escape, both rotation and forward movement adopt lower speeds, gradually increasing later, then decreasing, ensuring that the machine can escape. Specifically, during slipping escape, the equipment moves backward, then rotates at a speed of 10cm/s. If it can rotate, obstacle-free areas are detected during rotation, and the equipment is controlled to walk in the direction of obstacle-free areas after rotation. If it can walk for a preset duration (for example, 4s), this indicates successful escape. If it cannot rotate, forward movement is attempted. If it can move forward, after controlling the equipment to walk for another preset duration (for example, 8s), this indicates successful escape. If it cannot move forward, it continues to move backward, changes the speed of forward movement or rotation, and repeats the above process.

Optionally, if no obstacles exist within the range corresponding to the area to be traveled in the image, controlling the autonomous mobile robot to drive out from the area to be traveled to escape comprises:
if no obstacles exist within the range corresponding to the area to be traveled in the image and the robot is currently in a preset trapped scenario, determining whether the rotated angle in the current rotation direction is greater than a third preset angle;
if the rotated angle is greater than the third preset angle, controlling the autonomous mobile robot to drive out from the area to be traveled to escape.

Optionally, the method further comprises:
if the rotated angle is less than or equal to the third preset angle, controlling the autonomous mobile robot to rotate in the current rotation direction;
entering the step of detecting whether obstacles exist within the range corresponding to the area to be traveled in images ahead of the autonomous mobile robot.

The preset scenarios include dense grass trapped scenarios and slipping trapped scenarios. The third preset angles corresponding to dense grass trapped scenarios and slipping trapped scenarios may be different or the same. In dense grass trapped scenarios, since dense grass is generally a large area, when controlling the equipment to rotate at a random angle (third preset angle) greater than 60°, if obstacle-free areas exist, the equipment moves forward to drive out from trapped areas, which can improve escape efficiency. In slipping trapped scenarios, the equipment may be in a pit. When controlling the equipment rotation angle to be a random angle (third preset angle) of 90-180 degrees, if obstacle-free areas exist, the equipment moves forward to drive out from trapped areas, to prevent defects of low escape efficiency when the equipment is trapped in pits, where due to small rotation angles, the original angle is restored again during forward movement due to slope and self-weight reasons.

Optionally, after controlling the autonomous mobile robot to drive out from the area to be traveled to escape, the method further comprises:
determining whether escape is successful;
if escape is successful, controlling the autonomous mobile robot to start working.

Based on the above content, escape strategies that can be used for multiple collision trapped scenarios, dense grass trapped scenarios, and slipping trapped scenarios are explained separately below.

### (1) Multiple Collision Trapped Scenarios

Conditions for performing escape include at least one of the following:
the autonomous mobile robot has collisions greater than a preset number of times;
driving wheels of the autonomous mobile robot are stalled;
a lifting sensor detects that the autonomous mobile robot is lifted.

Multiple collision trapped scenarios mostly occur in narrow areas. Trapped scenarios can be divided into contact collision (physical collision) and non-contact collision (virtual collision) according to whether the autonomous mobile robot directly collides with obstacles. Scenarios where escape is triggered by direct collision with obstacles are called contact collision;scenarios where escape is triggered without direct collision with obstacles are called non-contact collision, for example: escape triggered by detecting obstacles in advance through sensors such as cameras.

In the embodiments of the present application, when the machine has contact collisions that meet requirements such as collisions, lifting, driving wheel stalls, etc. , it can be determined that it is trapped and escape actions are triggered. Whether the machine is trapped and whether to trigger escape actions can be determined based on whether collisions, lifting or stalls that meet duration requirements are detected, or whether collisions, lifting or stalls that meet frequency requirements and time interval requirements are detected. Specifically, when the machine has 3 consecutive collisions with each collision interval being less than 10s, or when the autonomous mobile robot detects collisions continuously within 3s, it can be considered that the machine is trapped and needs to trigger escape strategies corresponding to multiple collision trapped scenarios. When 20 collisions are detected within 5 minutes, it is determined that the scenario encountered by the machine is complex and may not be handled independently, so it will be controlled to stop and issue an alarm to remind the user for assistance. Further, to avoid the machine from falsely detecting collisions, only when collisions are detected continuously within 0.1s will it be determined that one collision has occurred. When the machine has 3 consecutive liftings with each detected lifting interval being less than 10s, or when the autonomous mobile robot detects lifting continuously within 3s, it can be considered that the machine is trapped and needs to trigger escape strategies corresponding to multiple collision trapped scenarios. Further, to avoid the machine from falsely detecting lifting, only when collisions are detected continuously within 0.2s will it be determined that one collision has occurred. When the machine has 3 consecutive stalls with each detected stall interval being less than 10s, or when the autonomous mobile robot detects stalls continuously within 3s, it can be considered that the machine is trapped and needs to trigger escape strategies corresponding to multiple collision trapped scenarios (stalls include left wheel stall or right wheel stall). Further, to avoid the machine from falsely detecting stalls, only when stalls are detected continuously within 3s will it be determined that one collision has occurred. When the machine detects 3 consecutive collisions, liftings or stalls, it can also be considered trapped and needs to trigger escape strategies corresponding to multiple collision trapped scenarios. Of course, the durations and frequencies used to determine being trapped in the above embodiments are only examples, and adaptive adjustments may be made according to improvements in machine detection accuracy to improve the machine's response time for initiating escape strategies, for example, detecting collisions continuously within 3s for the autonomous mobile robot may be adjusted to detecting collisions continuously within 2s, which is not limited by the present application. When any one of the contact collisions such as collisions, lifting, driving wheel stalls as described above is continuously detected 3 times, it can be determined that the machine is trapped, thereby triggering escape strategies corresponding to multiple collisions.

In the embodiments of the present application, when the machine has non-contact collisions that meet requirements, it can be determined that it is trapped and escape actions are triggered. When it is detected that the autonomous mobile robot circles twice in a small area within 40s, it can be determined that it is trapped (for example: trapped in a small area), and escape strategies need to be initiated. Specifically, whether it circles twice can be determined by detecting whether the machine's yaw angle changes by 540 degrees within 40s. Of course, it can also be determined that it is trapped when a certain angle greater than one circle is detected, which is not limited by the present application. When it is detected that the machine rotates in place multiple times and has multiple collisions within a short distance, it can be determined that the machine is trapped. For example, benchmark values for rotating in place and collisions within short distances are preset in the machine. The machine's actions can be scored according to the frequency of actual in-place rotation and the frequency of actually detected collisions respectively. When the score is greater than a preset threshold, it is determined that the machine is trapped (for example, trapped in a narrow passage), and escape strategies corresponding to multiple collisions can be triggered.

When non-contact collisions or contact collisions as described above are detected, it can be determined that the machine is trapped, thereby triggering escape strategies corresponding to multiple collisions.

Detecting whether the autonomous mobile robot meets conditions for performing escape;if conditions for performing escape are met, detecting whether obstacles exist within a range corresponding to an area to be traveled in images ahead of the autonomous mobile robot;if no obstacles exist within the range corresponding to the area to be traveled in the image, controlling the autonomous mobile robot to drive out from the area to be traveled to escape.

If obstacles exist within the range corresponding to the area to be traveled in the image, controlling the autonomous mobile robot to rotate;entering the step of detecting whether obstacles exist within the range corresponding to the area to be traveled in images ahead of the autonomous mobile robot.

If obstacles exist within the range corresponding to the area to be traveled in the image, controlling the autonomous mobile robot to rotate comprises:
if obstacles exist within the range corresponding to the area to be traveled in the image, determining whether the autonomous mobile robot has rotated a first preset angle in a current rotation direction;
if the first preset angle has not been rotated, controlling the autonomous mobile robot to rotate in the current rotation direction.

If obstacles exist within the range corresponding to the area to be traveled in the image, controlling the autonomous mobile robot to rotate further comprises:
if the first preset angle has been rotated, reducing the area to be traveled, and controlling the autonomous mobile robot to rotate in a direction opposite to the current rotation direction.

Optionally, if no obstacles exist within the range corresponding to the area to be traveled in the image, after controlling the autonomous mobile robot to drive out from the area to be traveled to escape, the method further comprises:
determining whether the distance that the autonomous mobile robot drives out from the area to be traveled is less than a first preset distance;
if less than the first preset distance, determining that the autonomous mobile robot meets conditions for performing escape, and accumulating the number of escape attempts once;

The method further comprises:
before controlling the autonomous mobile robot to rotate, determining whether the number of escape attempts corresponding to the current rotation direction reaches a preset number;
if the preset number is reached, controlling the autonomous mobile robot to rotate and suspend image acquisition;
when the autonomous mobile robot rotates a second preset angle, restarting image acquisition and clearing the number of escape attempts to zero.

If obstacles exist within the range corresponding to the area to be traveled in the image, reducing the area to be traveled;entering the step of detecting whether obstacles exist within the range corresponding to the area to be traveled in the image.

One side of the area to be traveled before reduction is greater than the body width of the autonomous mobile robot, and the other side is a second preset distance;one side of the area to be traveled after reduction is smaller than the body by a preset width or equal to the body width, and the other side is a third preset distance, the third preset distance being less than the second preset distance.

### (2) Dense Grass Trapped Scenario

The condition for performing escape includes: when the autonomous mobile robot is mowing grass in place, the actual rotational speed of the cutting disc is less than or equal to a preset rotational speed. During the machine's travel and grass mowing process, if the ratio between the actual rotational speed of the cutting disc and the originally set expected rotational speed is detected to be less than or equal to a preset value within a predetermined time, for example: when the ratio between the actual rotational speed of the cutting disc and the expected rotational speed is detected to be less than or equal to 55% within 3s, it can be determined that the cutting disc is stalled and the machine is trapped, requiring the initiation of escape strategies. When it is detected that the machine stalls 25 times within 10 minutes, to avoid machine damage, it can be controlled to stop and remind the user to assist the machine in handling the current scenario. It is worth noting that since the cutting disc needs some time to start and reach the expected rotational speed, when determining whether the machine has cutting disc stall, data detected within the first 5 seconds of cutting disc startup needs to be ignored.

Based on the above escape strategies applicable to multiple collision trapped scenarios, before first controlling the autonomous mobile robot to rotate, the autonomous mobile robot is controlled to stop the cutting disc and move backward, and when moving backward a preset distance, the autonomous mobile robot is controlled to start the cutting disc and begin rotating;if the autonomous mobile robot is currently in a slipping trapped scenario, the autonomous mobile robot is controlled to perform first rotation at a first speed, and different speeds are adopted for each rotation, the first speed being less than a preset speed.

If no obstacles exist within the range corresponding to the area to be traveled in the image, controlling the autonomous mobile robot to drive out from the area to be traveled to escape comprises:
if no obstacles exist within the range corresponding to the area to be traveled in the image and the robot is currently in a preset trapped scenario, determining whether the rotated angle in the current rotation direction is greater than a third preset angle;
if the rotated angle is greater than the third preset angle, controlling the autonomous mobile robot to drive out from the area to be traveled to escape.

If the rotated angle is less than or equal to the third preset angle, controlling the autonomous mobile robot to rotate in the current rotation direction;entering the step of detecting whether obstacles exist within the range corresponding to the area to be traveled in images ahead of the autonomous mobile robot.

### (3) Slipping Trapped Scenario

Conditions for performing escape include: images acquired by the visual sensor remain unchanged for a preset duration, or detecting whether the machine slips based on relationships between expected values and actual values of other sensors, such as the relationship between IMU and angular velocity, etc. For example, detecting that corner points in images have no change or basically no change within 6s. For example, comparing whether the difference between the expected cumulative value of angular velocity within 2s and the IMU yaw angle is greater than a preset threshold, or detecting whether the situation of being greater than the preset threshold is triggered 4 times within 10s. If these conditions are met, machine slipping is confirmed, and escape strategies corresponding to slipping can be initiated.

Based on the above escape strategies applicable to multiple collision trapped scenarios, the autonomous mobile robot is controlled to perform first rotation at a first speed, and different speeds are adopted for each rotation, the first speed being less than a preset speed.

If no obstacles exist within the range corresponding to the area to be traveled in the image, controlling the autonomous mobile robot to drive out from the area to be traveled to escape comprises:
if no obstacles exist within the range corresponding to the area to be traveled in the image and the robot is currently in a preset trapped scenario, determining whether the rotated angle in the current rotation direction is greater than a third preset angle;
if the rotated angle is greater than the third preset angle, controlling the autonomous mobile robot to drive out from the area to be traveled to escape.

If the rotated angle is less than or equal to the third preset angle, controlling the autonomous mobile robot to rotate in the current rotation direction;entering the step of detecting whether obstacles exist within the range corresponding to the area to be traveled in images ahead of the autonomous mobile robot.

Specific implementation processes in the escape strategies for the above scenarios are detailed in the descriptions above.

The control method for autonomous mobile robot of the present application detects whether the autonomous mobile robot meets conditions for performing escape;if conditions for performing escape are met, detects whether obstacles exist within a range corresponding to an area to be traveled in images ahead of the autonomous mobile robot;if no obstacles exist within the range corresponding to the area to be traveled in the image, controls the autonomous mobile robot to drive out from the area to be traveled to escape. The present application detects whether obstacles exist in the area to be traveled ahead of the autonomous mobile robot based on images acquired by visual sensors, and then controls the autonomous mobile robot to drive out from areas without obstacles to escape. Since visual recognition makes the travel direction of the autonomous mobile robot more targeted when escaping, it can effectively improve the escape efficiency of the autonomous mobile robot in complex areas.

The present application also provides an autonomous mobile robot, the autonomous mobile robot comprising a visual sensor and a controller;
the visual sensor, configured to acquire images ahead of the autonomous mobile robot;
the controller, configured to implement steps of the control method for autonomous mobile robot as described in any of the above when executed.

In addition to the above methods and equipment, embodiments of the present application may also be computer program products, comprising computer program instructions that, when executed by a processor, cause the processor to execute steps in the direction determination method for autonomous mobile robots according to various embodiments of the present invention described in the above "exemplary direction determination method" section of this specification.

It should be understood that various parts of the present invention may be implemented using hardware, software, firmware, or combinations thereof. In the above embodiments, multiple steps or methods may be implemented using software or firmware stored in memory and executed by suitable instruction execution systems. For example, if implemented using hardware, as in another embodiment, any one or combinations of the following techniques known in the art may be used: discrete logic circuits having logic gate circuits for implementing logic functions on data signals, application-specific integrated circuits having suitable combinational logic gate circuits, programmable gate arrays (PGA), field-programmable gate arrays (FPGA), etc.

Those of ordinary skill in the art can understand that all or part of the steps carried by the above embodiment methods can be completed by instructing related hardware through programs. The programs can be stored in computer-readable storage media, and when executed, the programs include one or combinations of steps of the method embodiments.

Furthermore, each functional unit in various embodiments of the present invention may be integrated into one processing module, or each unit may exist separately physically, or two or more units may be integrated into one module. The above integrated modules may be implemented in the form of hardware or in the form of software functional modules. If the integrated modules are implemented in the form of software functional modules and sold or used as independent products, they may also be stored in computer-readable storage media.

The storage media mentioned above may be read-only memory, magnetic disks, optical disks, etc.

Although only several embodiments of the present invention are described and illustrated in this specification, those skilled in the art should easily foresee other means or structures for performing the functions described herein and/or obtaining the structures described herein, and each such variation or modification is considered to be within the scope of the present invention.

## Claims

1. A method for controlling an autonomous mobile robot, wherein the method comprises:
receiving near-field obstacle information sent by at least one sensor, the at least one sensor being mounted on the autonomous mobile robot;
generating an obstacle position map around the autonomous mobile robot based on the near-field obstacle information;
generating an escape path in response to receiving the near-field obstacle information multiple times within a limited time or space; wherein
generating an escape path comprises: searching for a passable direction based on a current position of the autonomous mobile robot and the obstacle position map.

2. The method according to claim 1, wherein the near-field obstacle information comprises at least one of the following:
collision information indicating a contact collision of the autonomous mobile robot, lifting information indicating a lifting of the autonomous mobile robot,
motor torque information indicating a stall of a driving motor of the autonomous mobile robot, or
non-contact obstacle sensing information indicating presence of an obstacle around the autonomous mobile robot.

3. The method according to any one of claims 1-2, wherein generating the obstacle position map around the autonomous mobile robot based on the near-field obstacle information comprises:
marking a position on the obstacle position map corresponding to the near-field obstacle information as a near-field obstacle.

4. The method according to any one of claims 1-3, wherein the obstacle map is a local map around the autonomous mobile robot, and the local map is updated as the autonomous mobile robot moves.

5. The method according to any one of claims 1-4, wherein searching for a passable direction based on the current position of the autonomous mobile robot and the obstacle position map comprises:
expanding the near-field obstacles in the obstacle position map according to an expansion coefficient, the expansion coefficient being approximately equal to a width of the autonomous mobile robot;
determining an area in the obstacle position map where the near-field obstacle is absent as the passable direction.

6. The method according to claim 5, wherein expanding the near-field obstacle in the obstacle position map according to the expansion coefficient comprises:
expanding a subset of near-field obstacles in the obstacle position map according to the expansion coefficient, the subset of near-field obstacles comprising the non-contact obstacle sensing information indicating presence of an obstacle around the autonomous mobile robot.

7. The method according to any one of claims 1-6, wherein searching for a passable direction based on the current position of the autonomous mobile robot and the obstacle position map comprises:
obtaining a search direction and a search range for the near-field obstacles in the obstacle position map,
determining, as the passable direction, a direction within the search range where the near-field obstacle is absent,
wherein an initial search direction is a direction opposite to a movement direction of the autonomous mobile robot, and the search range is an area, determined by the search direction, that exceeds an area covered by the autonomous mobile robot on the map.

8. The method according to claim 7, wherein when the passable direction cannot be found in the obstacle position map along the initial search direction, the search direction is switched to the direction opposite to the initial search direction.

9. The method according to any one of claims 7-8, wherein the method further comprises: keeping the search direction unchanged until the near-field obstacle information is received again during a process in which the autonomous mobile robot travels toward the passable direction.

10. The method according to any one of claims 7-9, wherein searching for a passable direction based on the current position of the autonomous mobile robot and the obstacle position map comprises:
during a process of controlling the autonomous mobile robot to travel toward the passable direction, when the near-field obstacle information is received within a continuous time period, switching the search direction to the direction opposite to the initial search direction.

11. The method according to any one of claims 1-10, wherein searching for a passable direction based on the current position of the autonomous mobile robot and the obstacle position map comprises:
correspondingly adjusting the passable direction as the current position of the autonomous mobile robot is updated and the obstacle position map is updated.

12. The method according to any one of claims 1-11, wherein searching for a passable direction based on the current position of the autonomous mobile robot and the obstacle position map comprises:
when the autonomous mobile robot cannot search for the passable direction, controlling the autonomous mobile robot to ignore the obstacle position map and adjust a pose, the pose adjustment comprising at least one of the following: moving forward, moving backward, or rotating; and
searching for a passable direction according to a current position of the autonomous mobile robot after pose adjustment and the obstacle position map.

13. The method according to claim 12, wherein searching for a passable direction according to the current position of the autonomous mobile robot after pose adjustment and the obstacle position map comprises:
searching for a passable direction according to the current position of the autonomous mobile robot after pose adjustment and the updated obstacle position map;
wherein the obstacle position map is obtained after updating obstacles in the obstacle position map according to a preset rule, the preset rule being that when near-field obstacles identified in real-time by an non-contact obstacle sensing sensor mounted on the autonomous mobile robot are inconsistent with obstacles in the obstacle position map, the obstacle position map is updated according to real-time identification results of the non-contact obstacle sensing sensor.

14. The method according to any one of claims 1-13, wherein a movement angular velocity and a movement linear velocity are determined according to an angle difference between the movement direction of the autonomous mobile robot and the passable direction, the autonomous mobile robot is controlled to move toward the passable direction according to the movement angular velocity and the movement linear velocity, wherein the movement angular velocity is positively correlated with the angle difference, and the movement linear velocity is negatively correlated with the angle difference.

15. The method according to any one of claims 1-14, wherein searching for a passable direction based on the current position of the autonomous mobile robot and the obstacle position map comprises:
during a process of controlling the autonomous mobile robot to move toward the passable direction, determining whether the autonomous mobile robot is capable of rotate according to the obstacle position map around the autonomous mobile robot;
if rotation is possible, controlling the autonomous mobile robot to rotate, and searching for the passable direction according to a position after rotation.

16. The method according to claim 15, wherein when determining whether the autonomous mobile robot is capable of rotate, an initial rotation direction when the autonomous mobile robot determines a rotation direction is consistent with a boundary-following direction of the autonomous mobile robot.

17. The method according to claim 15 or 16, wherein searching for the passable direction according to the position after rotation comprises:
during a process of controlling the autonomous mobile robot to rotate, determining whether the near-field obstacle exists ahead through obstacle remote sensing information collected in real-time by an obstacle remote sensing sensor, the obstacle remote sensing sensor being mounted on the autonomous mobile robot, the obstacle remote sensing sensor being configured to identify obstacle remote sensing information around the autonomous mobile robot;
when it is determined that the near-field obstacle does not exist, treating the direction as the passable direction, and controlling the autonomous mobile robot to move along the direction.

18. The method according to claim 17, wherein determining whether the near-field obstacle exists ahead is performed through obstacle remote sensing information collected in real-time by the obstacle remote sensing sensor and the obstacle position map.

19. The method according to any one of claims 1-18, wherein the method further comprises:
when the autonomous mobile robot travels along the escape path for at least a first preset distance, determining that the autonomous mobile robot has successful escaped.

20. The method according to any one of claims 1-19, wherein the method further comprises:
after the autonomous mobile robot successfully escapes, marking, as an obstacle, an area in the obstacle position map that was traversed by the autonomous mobile robot while receiving the near-field obstacle information multiple times within a limited time period or space, and planning a path according to the updated map.

21. An autonomous mobile robot, wherein the autonomous mobile robot comprises:
at least one sensor, the at least one sensor being configured to acquire and send near-field obstacle information, the at least one sensor being mounted on the autonomous mobile robot;
a controller, the controller being signal connected to the at least one sensor, configured to receive the near-field obstacle information, generate an obstacle position map around the autonomous mobile robot based on the near-field obstacle information, and generate an escape path in response to receiving the near-field obstacle information multiple times within a limited time or space; wherein
generating an escape path comprises: searching for a passable direction based on a current position of the autonomous mobile robot and the obstacle position map.

22. A computer-readable storage medium, wherein a computer program is stored in the computer-readable storage medium, the computer program being loaded and executed by a processor to implement the method for controlling an autonomous mobile robot according to claims 1-20.
